# FASCICULE DE BREVET EUROPEEN

(11) **EP 2 903 831 B1**
(45) Date de publication et mention de la délivrance du brevet: **18.03.2020**
(21) Numéro de dépôt: 13780185.8
(22) Date de dépôt: 03.10.2013
(51) Int. Cl.: B41J 3/407, B41M 5/00, B41J 2/045

(54) **PROCÉDÉ D'IMPRESSION D'UN MARQUAGE PAR JET D'ENCRE SUR UNE SURFACE**
VERFAHREN ZUM DRUCKEN EINER TINTENDRUCKMARKIERUNG AUF EINER OBERFLÄCHE
PROCÉDÉ D'IMPRESSION D'UN MARQUAGE PAR JET D'ENCRE SUR UNE SURFACE

(30) Priorité: 03.10.2012 FR 1259375
(43) Date de publication de la demande: 12.08.2015
(73) Titulaire: Essilor International, 94220 Charenton-le-Pont (FR)
(72) Inventeur: LIPPENS, Xavier, 94220 Charenton Le Pont (FR); SIMONIN, Daniel, 94220 Charenton Le Pont (FR)
(74) Mandataire: Jacobacci Coralis Harle
(86) Numéro de dépôt international: PCT/FR2013/000259
(87) Numéro de publication internationale: WO 2014/053716

(56) Documents cités:
- EP-A1- 1 270 229
- EP-A2- 0 726 150
- WO-A1-2010/084272
- US-A- 6 120 141
- US-A1- 2009 295 846
- US-B1- 6 293 642

## Description

La présente invention concerne d'une manière générale un procédé d'impression d'un motif, dit marquage, de préférence temporaire, par jet d'encre sur une surface, notamment une surface hydrophobe et plus particulièrement la surface d'un article d'optique et plus spécifiquement d'une lentille ophtalmique telle qu'un verre de lunette.

La présente invention concerne également un article d'optique, notamment une lentille et plus particulièrement une lentille ophtalmique telle qu'un verre de lunette, sur une surface principale duquel est formé un marquage d'encre, de préférence temporaire.

Il est connu d'imprimer un marquage sur une surface d'un substrat au moyen d'un jet d'encre, notamment d'un article d'optique et plus particulièrement d'une lentille ophtalmique.

Dans le cas des lentilles ophtalmiques telles que les verres de lunette, cette impression, d'un marquage d'encre sur une surface de la lentille aussi appelé traçage, a pour objet de permettre l'alignement et le contrôle de l'alignement de lentilles ophtalmiques finies, c'est-à-dire surfacées et ayant reçues les valeurs ajoutées (revêtements anti-rayure, anti-chocs, anti-reflets, anti-salissures...Etc), pour les étapes suivantes de traitement des lentilles ophtalmiques finies, en particulier le taillage des lentilles ophtalmiques finies pour les conformer à la taille et à la forme d'une monture ou le perçage de ces lentilles ophtalmiques pour leur fixation à une monture.

Ces lentilles ophtalmiques finies sont généralement stockées dans des enveloppes, par exemple des enveloppes de papier, avant les traitements finaux, notamment le débordage. Lors du transport de ces lentilles finies dans leur enveloppe, le matériau de l'enveloppe frotte sur les surfaces principales des lentilles finies, ce qui se traduit par une destruction totale ou partielle des marquages imprimés. Ceci pouvant avoir pour effet d'augmenter les difficultés de contrôle et d'alignement des lentilles ophtalmiques finies pour les étapes ultérieures de traitement telles que le taillage, voire de rendre impossibles ces étapes, et pouvant de plus avoir un effet négatif du client sur la perception de la qualité du produit et service fourni.

Il est important de noter qu'un traçage peut aussi être effectué sur des lentilles semi-finies, non surfacées en face arrière, avec ou sans valeurs ajoutées en face avant, ou même sur des lentilles ophtalmiques taillées, c'est-à-dire finies et à la forme de la monture. L'invention n'est donc pas limitée au traçage sur lentilles ophtalmiques finies.

Dans le cas de surfaces non mouillantes, par exemple pour les surfaces hydrophobes, les gouttes d'encre déposées et solidifiées ont généralement une faible adhérence avec la surface, qui se traduit par une destruction plus rapide des marquages imprimés lors du transport des lentilles.

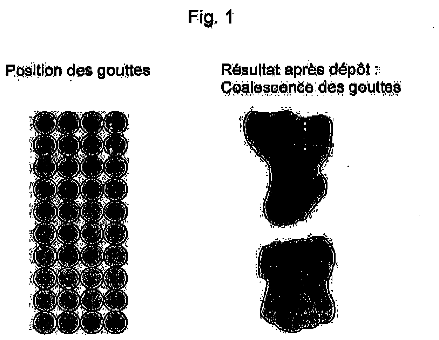

En outre, dans le cas des surfaces hydrophobes, la facilité de coalescence des gouttes d'encre dégrade la qualité du tracé. Ce phénomène de coalescence a été schématisé sur la figure 1 et consiste en une réunion de plusieurs gouttes d'encre initialement déposées côte-à-côte, du fait de la tension superficielle des gouttes d'encre et de leur mobilité sur le substrat, pour former des tâches d'encre généralement séparées, de plus grande dimension et de formes imprécises. Il en résulte une déformation et une perte de netteté du marquage. De façon générale, afin d'éviter les problèmes de coalescence, il peut être nécessaire de déposer les gouttes avec une énergie cinétique plus faible, ce qui induit généralement des marquages moins nets.

Ainsi, les impressions de marquages par jet d'encre de l'état de la technique sur une surface principale d'une lentille ophtalmique finie, notamment sur une surface hydrophobe, se heurtent à deux difficultés majeures :
- une mauvaise définition du tracé du marquage due à la coalescence des gouttes d'encre ; et
- une mauvaise tenue mécanique qui se traduit par un effacement total ou partiel du marquage lorsque la lentille ophtalmique finie est manipulée dans son emballage.

Pour augmenter l'adhérence du marquage d'encre sur la surface d'un substrat, notamment hydrophobe, il a été proposé de modifier l'adhésion de surface : soit en recouvrant le substrat d'une couche d'accroche temporaire en matériau adhérant visant à augmenter l'adhésion de l'encre sur le substrat, soit en développant des encres spécifiques adhérant mieux aux surfaces, notamment hydrophobes, c'est-à-dire ayant un angle de contact statique plus faible, des substrats.

La première solution, consistant au dépôt d'une couche d'accroche temporaire, nécessite d'introduire une étape supplémentaire dans la fabrication de l'article d'optique, en augmentant ainsi le coût, et nécessite son enlèvement, généralement manuel, à la fin des opérations.

La seconde solution, utilisation d'encres spécifiques, nécessite des frais de développement importants et augmente sensiblement les coûts de fabrication des articles d'optique.

Ces solutions de l'art antérieur sont décrites, entre autres, dans la demande EP1392613. Le document WO2010084272 décrit quant à lui une impression avec une encre photo-polymérisable, suivi d'une surimpression par une encre transparente.

D'autres solutions, par exemple décrites dans la demande EP2487039, proposent de choisir une encre polymérisable au moyen d'ultraviolets ainsi qu'une taille de gouttes et une densité de gouttes empêchant toute superposition de gouttes et de polymériser chaque goutte, l'une après l'autre, immédiatement après son dépôt afin d'éviter la coalescence des gouttes.

La présente invention a donc pour objet de fournir un procédé d'impression d'un marquage par jet d'encre sur une surface, notamment une surface hydrophobe, qui remédie aux inconvénients de l'art antérieur.

En particulier, la présente invention propose un procédé d'impression d'un motif, de préférence temporaire, par jet d'encre ayant une bonne tenue mécanique sur la surface du substrat, y compris une surface hydrophobe, et évitant le phénomène de coalescence. En outre, les résultats avantageux de l'invention sont obtenus sans qu'il soit nécessaire de recouvrir le substrat par une couche d'accroche supplémentaire temporaire en matériau adhérant augmentant l'adhésion ou de développer des encres spécifiques. Ainsi, le procédé de l'invention peut être mis en oeuvre avec succès pour toutes les encres classiquement utilisées dans le marquage d'articles ophtalmiques, notamment de lentilles ophtalmiques et ce sur toutes les surfaces employées, y compris les plus hydrophobes.

L'invention a également pour objet un article d'optique, notamment une lentille ophtalmique finie comportant un marquage d'encre, de préférence temporaire, qui adhère suffisamment au substrat pour ne pas être détérioré par son transport dans un emballage et dont le tracé n'est pas altéré par coalescence des gouttes d'encre du marquage.

L'objet de l'invention est donc d'augmenter la tenue et la qualité du traçage sans modification chimique de l'Interface.

Pour ce faire, on utilise au moins deux passages d'impression d'encre, le premier passage dépose une première couche d'encre et comprend l'éjection de gouttes d'encre à une vitesse suffisante pour les écraser sur la surface à imprimer en augmentant ainsi l'adhérence de l'encre sur la surface à imprimer.

La première couche d'encre, ayant été déposée avec une énergie cinétique élevée, a une adhérence avec la surface de la lentille ophtalmique augmentée qui persiste après solidification de l'encre. Cette augmentation permet au marquage de mieux résister à l'abrasion.

Du fait de la vitesse d'éjection relativement élevée des gouttes d'encre de la première couche, il est préférable que les gouttes d'encre de la première couche soient de petite taille pour éviter des risques de rebond ou d'éclatement des gouttes, notamment lorsque le traçage est effectué sur une surface courbe telle que la surface d'une lentille ophtalmique finie.

En outre, du fait de leur petite taille, les gouttes d'encre de la première couche n'ont pas ou peu de contact latéral entre elles, limitant ainsi un risque de coalescence des gouttes de cette première couche.

Il est alors préférable que pour au moins une partie du marquage, toute la première couche soit faite avec des petites gouttes d'encre. Toute goutte d'encre trop grosse risquerait d'éclater, nuisant à la bonne définition du marquage.

Cette première couche d'encre n'est généralement pas suffisamment visible, et on réalise donc un deuxième passage.

Dit autrement, pour réaliser un point du marquage, il est déposé en premier lieu une première goutte d'encre, avec une vitesse suffisante pour l'écraser sur la surface non mouillante et il est ensuite déposé une seconde goutte d'encre.

Il est avantageux que les deuxièmes gouttes d'encre aient au moins une couleur visible, c'est-à-dire qu'elles soient absorbantes dans le spectre du visible, soit naturellement, soit par fluorescence lors d'une stimulation, par exemple par ultraviolet.

Dans un cas particulier, les premières et les deuxièmes gouttes d'encre ont la même couleur.

Lors du deuxième passage, les gouttes de la première couche sont solides. C'est-à-dire qu'elles sont dans leur état final avant que les gouttes d'encre de la deuxième couche soient déposées sur les gouttes d'encre de la première couche. Leur état final peut être obtenu par polymérisation, séchage, évaporation d'un solvant, refroidissement, durcissement... selon le type d'encre utilisé. Ceci peut être fait au moyen d'une étape de durcissement/polymérisation postérieure au premier passage d'impression d'encre. Alternativement, il peut être fait en cours du premier passage, soit goutte par goutte, soit plus globalement en utilisant une tête de durcissement/polymérisation à la suite de la tête d'impression, par exemple au moyen d'une lampe émettant un rayonnement ultraviolet.

Le deuxième passage comprend l'éjection de gouttes d'encre, généralement de plus grosse taille que les gouttes d'encre de la première couche, à une vitesse d'éjection généralement plus faible que celle des gouttes d'encre de la première couche ; en pratique la vitesse d'éjection habituellement utilisée pour le traçage sur la surface de lentilles ophtalmiques de même courbure pour lesquelles il n'est pas considéré y avoir de problèmes d'adhésion avec cette même encre. Toutefois, la vitesse d'éjection des secondes gouttes d'encre lors du deuxième passage peut être égale à celle des premières gouttes d'encre déposées lors du premier passage. Dans certains cas, le deuxième passage comprend un dépôt de deux couches d'encre successives déposées avec une même vitesse d'éjection et généralement une même taille de goutte.

Les gouttes d'encre de la deuxième couche sont déposées chacune au moins en partie sur les gouttes d'encre de la première couche assurant ainsi la mouillabilité des gouttes d'encre de la seconde couche, sur leur surface de dépôt, ici les petites gouttes aplaties et durcies de la première couche. Préférentiellement, chaque goutte d'encre de la deuxième couche recouvre au moins une goutte d'encre de la première couche.

Ainsi, du fait que l'on dépose des gouttes d'encre sur une sous-couche d'encre durcie connue, formée par les gouttes d'encre solidifiées de la première couche, l'adhésion et le comportement des gouttes de la deuxième couche deviennent indépendants des traitements de surface et des matériaux de la surface de la lentille ophtalmique. En effet, l'adhésion sur l'encre de la couche d'encre déposée au premier passage (préférentiellement du même matériau) est connue.

Il est alors aisé de déposer des grosses gouttes d'encre, aux vitesses permettant de donner au marquage un contraste et une visibilité suffisant, sans risque de comportement non maitrisée des gouttes lors du deuxième passage.

La taille et la vitesse d'éjection des gouttes d'encre de la seconde couche dépendent du rendu visuel désiré.

Une coalescence partielle des gouttes de la deuxième couche peut se produire, ou être recherchée, sans perturber le tracé du marquage qui est stabilisé par l'encre déposée lors du premier passage.

Le deuxième passage permet de rendre le marquage plus visible et permet une résilience plus importante à l'abrasion. En effet, le matériau de l'encre peut être friable une fois durci. Lors du transport d'une lentille ophtalmique l'encre est soumise à une abrasion. Lorsque le matériau est friable, une quantité de matière donnée est abrasée dans l'épaisseur du marquage tracé. En déposant une deuxième couche il est ainsi possible d'avoir toujours une épaisseur de matière suffisante pour permettre une bonne visibilité du marquage même après abrasion d'un peu de matière. Si l'on ne dépose pas la sous-couche selon l'invention sur un substrat hydrophobe, l'abrasion due au transport peut déplacer une partie du marquage sur toute son épaisseur au lieu de se limiter à abraser une fine épaisseur surfacique.

Une caractéristique importante de la présente invention est la non-mouillabilité initiale de la surface du substrat par les encres utilisées, en particulier l'encre utilisée lors du premier passage pour former la première couche.

Dans le cadre de la présente invention, on considère que l'encre est « peu-mouillable » si l'angle de contact statique de l'encre liquide avec la surface du substrat est supérieur à 80°, et non-mouillable lorsqu'il est égal ou supérieur à 90°, mieux encore égal ou supérieur à 95° et à tout le moins quand il est égal ou supérieur à 100°.

L'invention s'applique tout particulièrement à déposer des couches d'encre sur une surface sur laquelle l'encre liquide est non mouillable, mais elle pourrait aussi s'appliquer à des cas où l'encre est peu-mouillable de manière a augmenter la tenue mécanique de la couche d'encre sur cette surface.

Ainsi, selon un mode de réalisation de l'invention, pour améliorer l'adhésion d'une encre, en particulier d'une goutte d'encre, sur une surface à laquelle cette encre n'adhère pas, consiste donc à créer sur la surface une fine sous-couche au moyen d'une goutte d'encre elle-même non adhérant déposée dans des conditions telles que cette fine sous-couche adhère à la surface et constitue une couche d'accroche pour une seconde couche, par exemple une deuxième goutte d'encre, de telle sorte que la surface, recouverte par la première goutte solidifiée devienne « mouillable » par l'encre de la seconde couche.

Les gouttes d'encre sont en général traitées entre les deux passages, de préférence pour les gouttes de la première couche immédiatement après le dépôt sur la surface, de façon à ce que les gouttes « écrasées » soient solidifiées, notamment polymérisées, avant qu'elles ne puissent retourner à l'équilibre, c'est-à-dire revenir à une forme de sphère partielle caractéristique d'un liquide sur une surface non-mouillable.

Un aspect important de l'invention est l'écrasement, en particulier sans éclatement, des gouttes d'encre de la première couche qui conditionne la tenue de la première couche sur la surface du substrat.

La suite de la description se réfère aux figures annexées.

### Description des figures

La Figure 1 est une figuration schématique du phénomène de coalescence.
La Figure 2 est un organigramme des étapes d'un mode de réalisation du procédé de l'invention.
La Figure 3 est une photo obtenue après dépôt du premier passage selon l'invention sur une lentille ophtalmique 1 finie non taillée.
La Figure 4 est une photo obtenue après dépôt du second passage selon l'invention sur une lentille ophtalmique finie non taillée selon le procédé selon l'invention.
La Figure 5 est une photo obtenue après que la lentille ophtalmique marquée au moyen du procédé selon l'invention ait été soumise à une simulation de transport depuis le lieu de fabrication jusque chez l'opticien.
La Figure 6 est une photo obtenue après que la lentille ophtalmique marquée sans utiliser le procédé selon l'invention, ait été soumise à une simulation de transport depuis le lieu de fabrication jusque chez l'opticien.

Plus particulièrement, la présente invention concerne selon un premier mode de réalisation de l'invention un procédé d'impression d'un marquage par jet d'encre sur une surface non mouillable pour l'encre sous forme liquide qui comprend les étapes suivantes :
(a) former au moins une première goutte d'encre solidifiée sur la surface, par éjection au moyen d'une tête d'impression d'une première goutte d'encre liquide à une première vitesse d'éjection déterminée et avec un premier volume déterminé, et
(b) déposer sur au moins une partie de ladite première goutte d'encre au moins une deuxième goutte d'encre ayant un second volume, par éjection au moyen d'une tête d'impression d'une deuxième goutte d'encre liquide à une vitesse d'éjection.

Dans ce mode de réalisation, la première vitesse est suffisante pour écraser la première goutte d'encre et conférer à ladite première goutte d'encre une surface de contact d'écrasement équivalente à celle obtenue à l'équilibre pour une goutte d'encre liquide de même volume sur une surface mouillable.

Par surface mouillable on entend une surface sur laquelle la goutte d'encre liquide forme un angle de contact statique inférieur ou égal à 80°, préférentiellement inférieur ou égal à 60°.

De plus, la surface de contact d'écrasement correspond à une surface de contact entre la première goutte d'encre et la surface non mouillante lors du dépôt de la deuxième goutte d'encre.

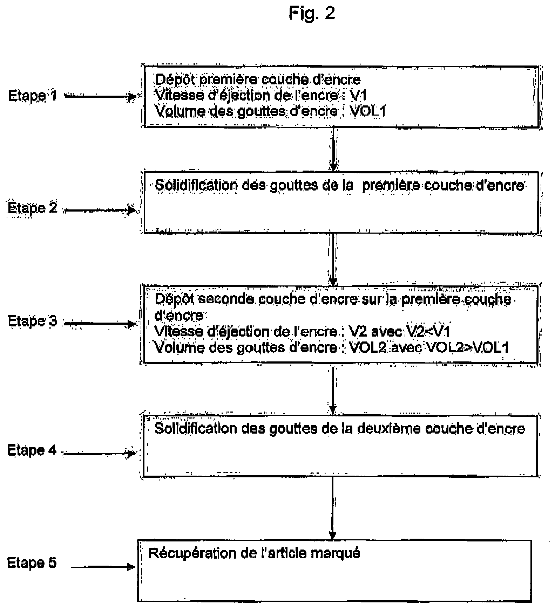

En général, le procédé de l'invention comprend pendant ou après chaque étape de dépôt d'une goutte d'encre liquide, une étape de solidification de la goutte d'encre déposée (étapes 2 et 4, figure 2).

Ainsi, si la première goutte d'encre liquide éjectée sur la surface est solidifiée avant le dépôt de la deuxième goutte d'encre, la surface de contact d'écrasement est définie comme la surface de contact de la première goutte d'encre sur la surface, une fois solidifiée.

Ces étapes de solidification 2 et 4 peuvent être mises en œuvre pendant les étapes de dépôt 1 et 3 ou à la fin de ces étapes de dépôt.

Selon la nature de l'encre utilisée, la solidification peut être obtenue par polymérisation, séchage, évaporation de solvant, refroidissement, durcissement. Le séchage et l'évaporation de solvant peuvent être effectués à température ambiante ou à une température supérieure. La polymérisation et le durcissement peuvent être une polymérisation ou un durcissement thermique ou par irradiation avec un rayonnement actinique, par exemple une irradiation à la lumière ultra-violette.

De telles étapes de solidification, notamment de séchage, polymérisation ou durcissement, sont bien connues de l'homme du métier.

Au final, on récupère un article marqué (étape 5, figure 2) dont le marquage est net et de bonne tenue mécanique.

La première vitesse d'éjection de la goutte d'encre, suffisante pour écraser la première goutte d'encre et lui conférer une surface de contact d'écrasement équivalente à celle obtenue à l'équilibre sur une surface mouillable, peut être définie de la manière suivante: c'est avantageusement une vitesse d'éjection telle que si l'on dépose plusieurs gouttes d'encre ayant un volume de 6 pL avec ladite vitesse d'éjection sur la surface non mouillable, le diamètre moyen des gouttes déposées solidifiées, tel que vu par au-dessus, est supérieur à 39 µm, de préférence égal ou supérieur à 40 µm et mieux égal ou supérieur à 42 µm.

L'observation des diamètres de gouttes peut être faite avec un microscope étalonné.

Selon un aspect de ce mode de réalisation la surface est une surface de courbure non-nulle.

Ainsi, le marquage peut être imprimé sur la surface d'un article d'optique, de préférence une lentille ophtalmique.

Selon un autre aspect de ce mode de réalisation, le premier volume de la première goutte d'encre est inférieur à un volume critique pour lequel la première goutte d'encre éclate ou rebondit lorsqu'elle est déposée à la première vitesse sur la surface non mouillable.

Par surface non mouillable pour l'encre sous forme liquide on entend de préférence une surface telle que la goutte d'encre liquide a un angle de contact statique avec la surface supérieur ou égal à 90°, de préférence supérieur ou égal à 100°.

Selon un aspect de ce mode de réalisation, bien que l'on puisse utiliser des encres différentes pour la première goutte d'encre et la deuxième goutte d'encre, de préférence on utilisera pour la première et la deuxième goutte d'enore la même encre, en particulier, une encre ayant une même couleur. Dans tous les cas, au moins l'encre de la deuxième goutte a une couleur dans le visible.

Selon un aspect de ce mode de réalisation, la première goutte d'encre et la seconde goutte d'encre ont respectivement un premier volume VOL1 et un second volume VOL2 tels que VOL1/VOL2 < 1, voir VOL1/VOL2 ≤ 0,5, ou encore VOL1/VOL2 ≤ 0,2.

Le premier volume est par exemple compris dans l'intervalle [5 pL à 15 pL].

Le second volume est par exemple compris dans l'intervalle [20 pL à 50 pL].

La surface non mouillante peut en particulier être une surface hydrophobe ayant un angle de contact statique avec l'eau supérieur ou égal à 80°,mieux supérieur ou égal à 90°, mieux encore supérieur ou égal à 100°, et de préférence supérieur ou égal à 110°.

Un second mode de réalisation de l'invention est un procédé d'impression d'un marquage, par exemple un marquage temporaire, par jet d'encre sur une surface non mouillable pour ladite encre sous forme liquide. Ce procédé d'impression d'un marquage comprend une répétition des étapes du premier procédé selon le premier mode de réalisation, Il est ainsi procédé à la formation de plusieurs premières gouttes d'encre solidifiées sur la surface non mouillable et au dépôt de plusieurs deuxièmes gouttes d'encre par-dessus lesdites premières gouttes.

Ainsi en répétant les étapes du procédé selon premier mode de réalisation, il est possible de former un marquage comprenant une répétition de points d'accroche réalisés par les premières gouttes d'encre solidifiées, écrasées sur la surface non mouillable de façon à conférer une adhérence suffisante, et au-dessus, une répétition de deuxièmes gouttes d'encres qui permettent de donner une visibilité suffisante au marquage.

Selon un aspect du deuxième mode de réalisation, plusieurs des premières gouttes d'encre solidifiées sont formées sur la surface en un premier passage d'impression jet d'encre et plusieurs des deuxièmes gouttes d'encre déposées par-dessus lesdites premières gouttes d'encre sont déposées dans un deuxième passage d'impression jet d'encre, postérieur au premier passage.

Alternativement certaines des deuxièmes gouttes d'encres sont déposées sur des premières gouttes d'encre solidifiées alors que toutes les premières gouttes d'encre permettant de former le marquage ne sont pas encore formées sur la surface.

Selon un aspect de l'invention, lors du premier passage, seules des premières gouttes sont déposées. Selon un autre aspect de l'invention, une minorité de gouttes déposées lors du premier passage ne sont pas des premières gouttes telle que définies plus haut. Ladite minorité est définie comme représentant moins d'un tiers des gouttes, préférentiellement moins d'un quart, voir moins d'un cinquième des gouttes déposées lors du premier passage. De préférence, sensiblement toutes les gouttes d'encre solidifiées formées lors du premier passage sont des première gouttes d'encre telles que définies plus haut.

L'invention s'applique aussi à un article comprenant une surface principale sur laquelle est imprimé au moins un marquage par jet d'encre sur une surface non mouillable pour l'encre sous forme liquide. En particulier ledit marquage comprend une première goutte d'encre solidifiée ayant un premier volume et une surface de contact d'écrasement avec la surface de la lentille équivalente à celle obtenue à l'équilibre pour une goutte d'encre liquide de même volume sur une surface mouillable. Par surface mouillable on entend une surface sur laquelle la goutte d'encre liquide a un angle de contact inférieur ou égal à 80°, préférentiellement inférieur ou égal à 60°.

Le marquage comprend de plus une deuxième goutte d'encre ayant un second volume, recouvrant au moins en partie ladite première goutte d'encre.

Selon un aspect de l'invention, l'article précédent peut comprendre plusieurs premières gouttes séchées formant une première couche et comportant plusieurs deuxièmes gouttes, formant au moins une deuxième couche.

On a représenté à la figure 2 sous forme d'organigramme un premier aspect du deuxième mode de réalisation du procédé de l'invention.

L'étape 1 consiste au dépôt par jet d'encre sur une surface d'un article d'une première couche d'encre E1 à une vitesse V1 et un volume de goutte VOL1. Cette première couche d'encre est ensuite solidifiée à l'étape 2 et forme un marquage de base sur lequel à l'étape 3, on forme une deuxième couche d'encre par dépôt par jet d'encre d'une encre E2 à une vitesse V2 inférieure à V1 et un volume de goutte VOL2 supérieur à VOL1, La seconde couche d'encre obtenue à l'étape 3 est alors solidifiée au cours d'une étape 4 avant la récupération à l'étape 5 d'un article ayant à sa surface un marquage imprimé net et de bonne tenue mécanique.

De manière générale, la première vitesse d'éjection V1 des premières gouttes d'encre E1 est choisie suffisamment élevée pour permettre un écrasement des premières gouttes d'encre E1, et ainsi une augmentation de la surface de contact des premières gouttes d'encre E1 avec la surface d'impression, notamment une surface d'impression hydrophobe.

Indépendamment de ce mode de réalisation, les inventeurs ont identifié une méthode pour déterminer la vitesse d'éjection V1 minimale adéquate. Selon l'invention, de façon générale, la vitesse d'éjection V1 minimale des premières gouttes d'encre E1 est telle que pour une encre E1 donnée et une surface de substrat en un matériau donné, en particulier hydrophobe, cette vitesse résulte pour une première goutte d'encre E1 de volume VOL1 de 6pL, en un diamètre moyen des gouttes déposées sur la surface du substrat supérieur à 39 µm, préférentiellement égal ou supérieur à 40 µm, mieux égal ou supérieur à 42 µm. En général, le diamètre moyen des gouttes d'encre E1 de la première couche sera de 41 µm à 45 µm, par exemple 43 µm.

Ainsi, un moyen adéquat de déterminer la première vitesse d'éjection de l'encre pour faire tenir les premières gouttes d'encre sur une surface, notamment hydrophobe, peut consister à :
- déposer sur la surface des gouttes de 6 pL à différentes vitesses croissantes d'éjection de l'encre :
- mesurer les diamètres moyens des gouttes déposées ; et
- retenir la vitesse d'éjection permettant d'obtenir des gouttes d'encre ayant un diamètre moyen au moins égal à 40 µm.

Le rayon moyen des gouttes peut être mesuré au moyen d'un microscope optique avec une optique grossissante 10x ou 20x avec une table de mesure étalonnée, selon son mode d'emploi, pour effectuer des déplacements précis inférieurs au micromètre et comportant un appareil de contrôle du déplacement. Un tel appareil peut être un microscope de mesure Nikon Trinocular MM40 distribué par Nikon Corp.

En particulier, il est possible de procéder à un dépôt de plusieurs gouttes de 6pL voisines avec une densité de 360 dpi (points par pouce (2,54 cm), en anglais "dot per inch"), soit environ un pas de 70,5 µm. Ensuite, En utilisant le microscope de mesure, les diamètres de 10 à 15 gouttes sont mesurés et moyennés. Si les gouttes sont coalescées, il est préférable de refaire les mesures avec un pas plus important.

Une relation simple peut être calculée entre le diamètre d'une goutte de liquide, assimilée à une partie de sphère, et l'angle de contact entre cette goutte et la surface sur laquelle elle est déposée. Le document Contact Angle and Wetting Properties de Yuehua Yuan and T. Randall Lee, Surface Science Techniques, Springer Series in Surface Sciences 51, DOI 10.1007/978-3-642-34243-1_1 à la partie 1.5.1: L'angle de mouillage à l'équilibre, Theta, pour une très petite goutte, peut être assimilé à 2∗Atan(h/c), avec h une hauteur au centre de la goutte et c le rayon d'un cercle décrivant la surface de contact entre la partie de sphère représentant la goutte et la surface sur laquelle est posée la goutte.

L'homme du métier sait, au moyen de ces calculs, et de calculs géométriques simples pour le volume d'une sphère partielle, qu'une goutte d'encre de 6 pL, ayant un angle de contact statique de 100° avec la surface, a un diamètre apparent de 26,3 µm environ pour une surface réelle de contact ayant un diamètre de 25,8 µm environ. Et pour un angle de contact statique de 110° comme pour les couples enore/surface étudiées dans l'invention : un diamètre de 25 µm pour un diamètre réel de contact de 23 µm.

De même, l'obtention d'une goutte de diamètre de 40 µm ou plus revient, hors mécanisme d'écrasement, à avoir soit une surface absorbante, soit un angle de contact statique entre la goutte et la surface inférieur à 49,5° lorsque le diamètre apparent est supérieur à 39,6 µm, et un angle inférieur à 45° (Pi/4) pour un diamètre apparent supérieur à 41 µm.

Ainsi, au vu des exemples ci-dessus, la vitesse d'éjection des premières gouttes est telle que les premières gouttes, ayant un angle de contact statique supérieur à 100° avec la surface, sont déformées de façon à recouvrir une surface équivalente à celle qu'elles recouvriraient si elles étaient présentes sur une surface ayant une forte mouillabilité, avec un angle de contact statique inférieur à 50°, préférentiellement 45°.

L'homme du métier comprend donc que l'invention concerne le fait d'ajouter suffisamment d'énergie cinétique à au moins une première goutte pour que d'un côté, la goutte soit écrasée sur la surface de façon à avoir, lors de sa solidification, une surface de contact proche d'une surface de contact, à l'équilibre, sur une surface mouillable, par exemple avec un angle de contact statique inférieur à 80°, préférentiellement inférieur à 70°, mieux inférieur à 60°, mieux encore Inférieur à 45°, et que de l'autre la goutte soit suffisamment petite pour qu'elle ne s'éclate ni ne se divise lors de l'impact entre la première goutte et la surface non mouillable. Ces cas d'éclatements peuvent au moins avoir lieu pour des gouttes de 35 à 50 pL éjectées sous une tension de 15V lorsqu'elles sont déposées directement sur la surface non-mouillable, hydrophobe avec un angle de contact statique avec l'eau supérieur à 110°.

Les premières gouttes, fortement écrasées, n'ont pas une forme de sphère partielle, ou de calotte sphérique, comme une goutte à l'équilibre avec un angle de contact statique de 45° à 60°, mais une forme s'apparentant plutôt à une version tronquée de la forme de disque biconcave caractéristique des "globules rouges".

Cependant, la méthode de détermination de la première vitesse V1 n'est pas critique pour pouvoir appliquer le principe de l'invention.

Une méthode alternative de détermination de la première vitesse V1, moins précise, mais aussi efficace industriellement que la méthode présentée ci-dessus, peut être de déposer, sur plusieurs substrats ayant une surface principale présentant des caractéristiques identiques de non mouillabilité avec l'encre liquide, des premières couches avec des gouttes ayant un premier volume identique compris entre 5 pL et 15 pL, par exemple 6 pL. De plus les premières couches sont déposées à des vitesses différentes suivant les substrats de façon à ce que pour au moins un substrat, bien identifié, la première couche est déposée à une première vitesse V1 différente de la première vitesse V1 utilisée pour déposer la première couche d'au moins un autre substrat. De préférence, plusieurs première vitesses V1 sont ainsi utilisées.

Ensuite, sur chacun des substrats il est procédé au second passage, au cours duquel une ou plusieurs couches peuvent être déposées avec des gouttes éjectées à une deuxième vitesse V2, ici plus faible que la première vitesse V1, et avec un second volume de gouttes plus important que le premier volume, par exemple un second volume sensiblement constant compris entre 20 pL et 60 pL; les deuxièmes vitesses V2 et le second volume étant ici identiques pour tous les substrats testés.

Les performances d'adhérence peuvent être ensuite évaluées en introduisant les lentilles marquées dans des pochettes usuelles, déposer les pochettes dans un contenant, agiter le contenant ou en procédant à une simulation de transport telle que décrit plus bas.

Il devient ensuite aisé pour l'homme de l'art de comparer visuellement les lentilles pour identifier celle ou celles ayant les marquages les moins dégradés et de déterminer ainsi une première vitesse d'éjection V1 minimale pour avoir un marquage ayant une adhérence suffisante.

Il est par ailleurs connu que lorsqu'on utilise des dispositifs d'éjection d'encre piézo-électriques, Il est possible, pour chaque tête d'impression, de corréler la vitesse d'éjection à la tension appliquée au dispositif. Dans ce cas, il est possible d'appliquer l'invention sans maîtriser directement la vitesse d'éjection en tant que telle et uniquement en variant les tensions appliquées.

Les inventeurs ont déterminé en particulier que pour une tête d'impression à jet d'encre XAAR (telle que la tête d'impression XAAR 1001 GS6) telle que celle utilisée dans la machine Teco X302 distribuée par la société TECOPTIQUE entre 2010 et au moins 2012 que des première vitesses V1 adéquates d'éjection de l'encre E1 de la première couche sont obtenues pour des tensions appliquées de 10 volts ou plus, de préférence 12 volts ou plus, mieux 14 volts ou plus et mieux encore 15 volts ou plus. En général, les tensions appropriées sont de 7 à 18 volts selon les encres et les machines d'impression à jet d'encre. Cependant, en fonction de la machine, de l'encre et de la mouillabilité de l'encre avec la surface la tension appropriée peut être plus forte ou plus faible.

Ainsi, la première vitesse V1 minimale utilisée selon l'invention, pour une goutte d'encre telle que celles utilisées de l'exemple, peut être définie comme étant la vitesse d'une goutte d'encre de 6 pL issue d'une tête d'impression XAAR 1001 GS6 ayant une tension appliquée de 10V, sachant que pour cette tête d'impression une tension appliquée de 18V correspond à une vitesse d'éjection d'environ 6m/s.

L'homme du métier comprendra que moins l'encre sera mouillable sur la surface, plus la première vitesse V1 minimale sera importante.

Selon un mode de réalisation de l'invention, comme indiqué ci-dessus, la vitesse d'éjection V2 de l'encre E2 pour former la deuxième couche d'encre du marquage imprimé peut être inférieure à la première vitesse V1 d'éjection de l'encre E1 de la première couche.

Dans le cas où on utilise un dispositif d'Impression piézo-électrique, les tensions à utiliser pour le deuxième passage seront choisies en fonction d'une visibilité voulue pour la deuxième couche et peuvent être inférieures, supérieurs ou égales à celles utilisées pour déposer la première couche, par exemple inférieure ou égale à 15 volts, ou à 12 volts, ou à 10 volts, voir même de 5 volts ou moins, par exemple 2 volts.

Comme déjà mentionné ci-dessus, on utilise de préférence pour former la première couche d'encre E1 sur la surface à marquer des gouttes d'encre de petite taille, c'est-à-dire ayant généralement un volume VOL1 inférieur ou égal à 18 pL, et généralement allant de 5 pL à 15 pL, par exemple 6 pL. On évite ainsi tout risque de coalescence des gouttes d'encre E1 de la première couche et surtout on évite que les gouttes déposées à la vitesse V1 ne rebondissent ou n'éclatent en entrant au contact de la surface non mouillable. L'homme du métier saura adapter le volume des gouttes de la première couche en fonction de la densité de points (dot per inch : dpi) qu'il désire pour le marquage à imprimer.

Le volume VOL2 des gouttes d'encre E2 de la deuxième couche est supérieur à celui des gouttes d'encre E1 de la première couche et est en général de 20 pL à 60 pL, par exemple 42 pL environ.

De préférence, le rapport VOL1/VOL2 des gouttes d'encre E1 et E2 satisfait la relation VOL1/VOL2<1, mieux VOL1/VOL2 ≤ 0.5 et mieux encore VOL1/VOL2 ≤ 0,2.

De préférence, le nombre de gouttes d'encre E1 de la première couche et le nombre de gouttes d'encre E2 de la seconde couche du marquage imprimé est le même. Mais, en variante, on peut prévoir un nombre supérieur de gouttes pour la première couche par rapport à la seconde couche. En outre, les gouttes d'encre de la première couche et celles de la seconde couche peuvent être réparties différemment. Ainsi, par exemple, on peut prévoir une plus grande densité de gouttes de la première et/ou de la seconde couche près des limites souhaitées du marquage et une moindre densité de gouttes au cœur du marquage,

Bien que l'on puisse utiliser des encres E1 et E2 différentes, de préférence on utilisera pour les première et deuxième couches la même encre, en particulier, ayant une même couleur. Dans tous les cas, au moins l'encre des deuxièmes gouttes a une couleur dans le visible.

Bien que, pour des raisons économiques, il soit suffisant de ne déposer que deux couches pour former le marquage d'encre, on peut effectuer le dépôt de couches supplémentaires. Ces couches supplémentaires sont de préférence déposées dans les mêmes conditions que la deuxième couche d'encre E2.

C'est en particulier le cas lors de traçage sur des surfaces de forte courbure telles que l'on trouve sur des lentilles ophtalmiques finies ou semi finies de base 5 ou plus. De telles lentilles présentent une variation importante de hauteur entre le centre et le bord. Une telle variation de hauteur peut conduire à avoir une perte de netteté aux bords si l'on utilise une vitesse normale de dépôt, même pour des surfaces qui ne sont pas particulièrement hydrophobes, Il est donc préférable dans ce cas, de déposer deux couches successives avec vitesse d'éjection réduite, par exemple avec une tension de 2 volts au lieu de déposer une couche avec une vitesse normale d'éjection, par exemple avec une tension de 5 volts.

SI la courbure de la lentille est telle que le procédé standard pour cette courbure préconise d'utiliser deux passages pour une surface non hydrophobe, le procédé selon l'invention comportera de préférences un premier passage à la vitesse d'éjection V1 avec des gouttes de volume VOL1 puis deux passages à vitesse d'éjection V2 avec des gouttes de volume VOL2.

Le procédé d'impression d'un marquage par jet d'encre selon l'invention peut être utilisé pour Imprimer un marquage d'encre sur tout type de surface, mais s'avère particulièrement approprié pour l'impression d'un marquage par Jet d'encre sur des surfaces dites hydrophobes, et plus particulièrement des surfaces dites ultra-hydrophobes d'articles d'optique tels que des lentilles ophtalmiques comme des verres de lunette.

Par surface hydrophobe dans la présente invention, on entend une surface ayant un angle de contact statique avec l'eau égal ou supérieur à 90°, mieux égal ou supérieur à 100° et de préférence égal ou supérieur à 110°.

De façon générale, l'Invention s'applique au dépôt d'encres ayant un mouillage insuffisant avec la surface à marquer. Par exemple l'encre peut être une encre pour surfaces hydrophiles que l'on désire déposer sur une surface hydrophobe; ou, inversement, l'encre peut être une encre pour surfaces hydrophobes que l'on désire déposer sur une surface hydrophile.

Des exemples de surfaces hydrophobes, classiquement utilisées dans l'optique ophtalmique, sont les couches anti-salissures utilisées comme revêtement externe des lentilles ophtalmiques et verres de lunette.

Parmi les couches anti-salissures usuelles, on peut citer les couches formées à partir des produits commerciaux OPTOOL-DSX® (fluoro-élastomère) et KY 130® commercialisés respectivement par les sociétés DAIKIN INDUSTRIES LTD et SHIN ETSU CHEMICAL CO. LTD, Ces revêtements ont des angles statiques avec l'eau égaux à 112,5° ou 115,5° pour deux variantes du produit DSX® et d'environ 111° pour le KY 130®.

Les encres utilisables dans le procédé peuvent être toutes encres classiquement utilisées pour l'impression de marquages par jet d'encre, notamment pour le marquage des lentilles ophtalmiques.

Parmi les encres commerciales utilisables dans le procédé de l'invention, on peut citer les encres T002 LED® et T002-06 LED® commercialisées par TECOPTIQUE, ou d'autres encres telles que l'encre Y-001®, Y-002®, Y-003® distribuée par Automation & Robotics®.

De préférence, après chaque étape de dépôt, la couche d'encre formée est solidifiée, par exemple par polymérisation irradiation aux UV, selon la nature de l'encre utilisée.

### Exemple:

On a réalisé le marquage par jet d'encre de la surface de différentes lentilles ayant une surface hydrophobe en utilisant le procédé de l'invention et un procédé usuel de marquage par jet d'encre.

### Caractéristique des lentilles

| | Puissance optique (dioptries) | Substrat | Revêtement AR | Revêtement hydrophobe |
|---|---|---|---|---|
| Lentille n° 1 | plan | CR39® | standard | OPTOOL DSX® |
| Lentille n° 2 | +6 | CR39® | standard | KY 130® |
| Lentille n° 3 | + 6 | CR39® | standard | OPTOOL DSX® |

Le type d'anti-reflet utilisé n'ayant pas d'impact sur les propriétés de surface, il n'est pas précisé plus en détail.

### Encres utilisées

T002 LED®
T002-06 LED®

### Angles de contact des encres avec la surface des lentilles

| Lentille n° | Angle de contact | |
|---|---|---|
| | Encre T002 LED | Encre T002-06 LED |
| 1 | 111° | 112° |
| 2 | 117° | 121° |
| 3 | 113° | 115° |

La mesure des angles de contact peut être fait par exemple avec une machine de mesure de type DSA100 distribuée par KROUS. En fonction de la manière dont l'angle de mouillage peut être mesuré, il peut être nécessaire d'effectuer un calcul afin de remonter à l'angle entre l'interface air-goutte et l'interface substrat-goutte.

### A - Impression selon l'invention

Dispositif d'impression par jet d'encre du type Teco X302 distribué par la société TECOPTIQUE.

### Paramètres d'impression

### Premier Passage

Volume des gouttes [6pL soit le réglage 1 de l'appareil Teco X302]
Tension appliquée [15V]
Nombre de gouttes déposées : densité uniforme de 360 dpi.
Polymérisation par UV suite au dépôt de la première couche d'encre complète.

### Deuxième passage

Le marquage déposé est globalement superposé au marquage du premier passage, les gouttes du deuxième passage pouvant déborder des gouttes du premier passage qu'elles recouvrent. Le marquage est de plus déposé en deux couches successives avec les mêmes paramètres d'impression avec une étape de polymérisation UV à la suite du dépôt de chacune des deux couches du deuxième passage.
Volume des gouttes [42pL] soit le réglage 7 de l'appareil Teco X302]
Tension appliquée [2V]
Nombre de gouttes déposées : densité uniforme de 360 dpi.

### B - Impression selon un procédé classique

Le marquage est de déposé en deux couches successives avec les mêmes paramètres d'impression avec une étape de polymérisation UV à la suite du dépôt de chacune des deux couches.
Volume des gouttes [42pL soit le réglage 7 de l'appareil Teco X302]
Tension appliquée [2V]
Nombre de gouttes déposées : densité uniforme de 360 dpi.
Polymérisation par UV suite à la création de la deuxième couche d'encre complète.

### C - Résultats

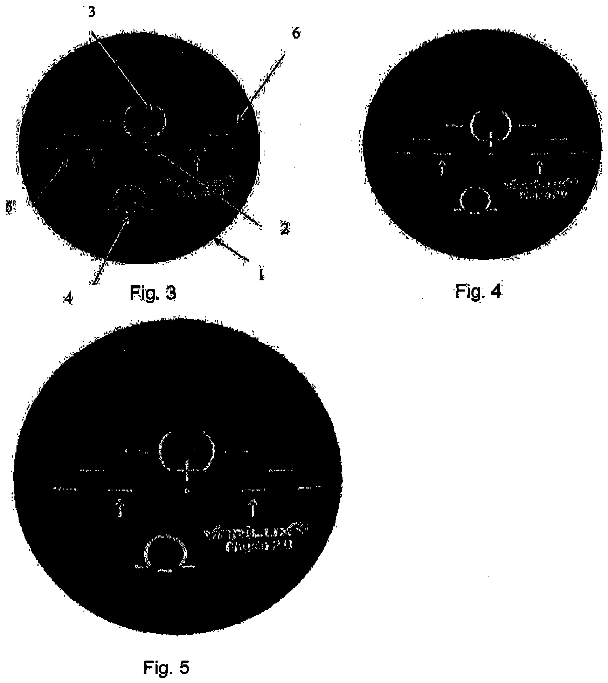

La figure 3 est une photo obtenue après dépôt du premier passage selon le procédé A selon l'invention sur une lentille ophtalmique 1 finie non taillée prévue pour un verre droit.

Cette lentille ophtalmique 1 présente ici des marques temporaires 2 à 5, à savoir un point de référence 2 situé au centre de cette lentille ophtalmique 1, une marque 3 indicatrice d'un point de contrôle d'une zone de vision de loin située juste au-dessus du point de référence 2, une marque 4 indicatrice d'un point de contrôle d'une zone de vision de près située en dessous du point de référence 2 et deux groupes 5 et 6 de traits d'alignements passant par un axe horizontal dit nasal-temporal (ou encore nez-oreille) permettant de repérer des microcercles.

Les microcercles, qui n'ont pas été rendus visibles sur cette photographie sont des marques permanentes qui permettent notamment de positionner correctement la lentille ophtalmique 1 pour des étapes postérieures de fabrication de cette lentille ophtalmique ; par exemple le surfaçage, le polissage et/ou le détourage de cette dernière.

Il est observable que le tracé des marques temporaires 2 à 6 est net mais avec un faible contraste.

La figure 4 est une photo obtenue après dépôt du second passage le procédé A selon l'invention sur une lentille ophtalmique finie non taillée prévue pour un verre droit.

Il est observable que le tracé est aussi net que sur la figure 3 mais présente un contraste important.

Il faut noter, qu'au sortir de la machine d'impression, une lentille ophtalmique finie non taillée tracée au moyen du procédé B ressemblera au premier abord à la lentille de la figure 4.

La figure 5 est une photo obtenue après que la lentille ophtalmique marquée au moyen du procédé selon l'invention ait été soumise à une simulation de transport depuis le lieu de fabrication jusque chez l'opticien.

En pratique, la simulation de transport est obtenue en plaçant la lentille ophtalmique finie non taillée dans une enveloppe standard utilisée pour ce type d'envoi par les industries d'ophtalmique, puis en plaçant cette lentille avec d'autres dans un carton qui est expédié en camion depuis Paris (France) jusque Dijon (France) puis réexpédié à Paris.

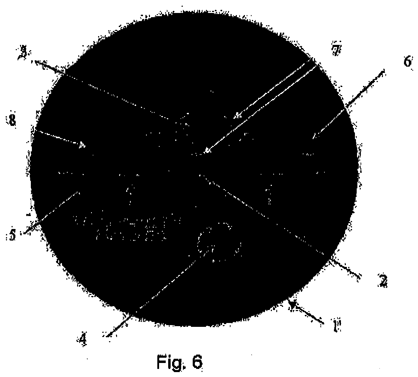

A titre de comparaison, la figure 6 est une photo obtenue après que la lentille ophtalmique marquée au moyen du procédé B, et donc n'utilisant pas le procédé selon l'invention, ait été soumise à une simulation de transport depuis le lieu de fabrication jusque chez l'opticien. La lentille ophtalmique 1' est prévue pour un œil gauche.

Il est ainsi observable que le marquage présent sur la lentille ophtalmique 1' comporte au moins deux zones 6 et 7 où le marquage est totalement effacé. Dans le cas de cette lentille, il est apparent notamment que dans la zone 6, deux des traits d'alignement gauches 5 permettant de repérer les microcercles sont effacés et dans la zone 7, une partie du marquage indicatif du point de contrôle de la zone de vision de loin 3 est aussi effacé. En particulier, le signe ")" droit est complètement effacé et le signe "+", qui aurait pu permettre de retrouver le centre de cette zone n'est plus reconnaissable.

On peut de plus observer que la lentille ophtalmique présente un aspect sali, des traces d'encre sont présentes sous une forme ressemblant à de la poussière sur le centre

## Revendications

1. Procédé d'impression d'un marquage par jet d'encre sur une surface non mouillable pour l'encre sous forme liquide, comprenant les étapes suivantes :
(a) former au moins une première goutte d'encre E1 solidifiée sur la surface, par éjection au moyen d'une tête d'impression d'une première goutte d'encre liquide à une première vitesse d'éjection V1 déterminée et avec un premier volume VOL1 déterminé, et
(b) déposer, sur au moins une partie de ladite première goutte d'encre solidifiée au moins une deuxième goutte d'encre E2 ayant un second volume VOL2, par éjection au moyen d'une tête d'impression d'une deuxième goutte d'encre liquide à une vitesse d'éjection V2,
**caractérisé en ce que** la première vitesse V1 est déterminée pour, à l'étape (a) écraser ladite première goutte d'encre sur ladite surface non mouillable, et pour, à l'étape (b),conférer à ladite première goutte d'encre solidifiée, une surface de contact avec ladite surface non mouillable équivalente à la surface de contact obtenue à l'équilibre pour une goutte d'encre liquide, de même volume VOL1, sur une surface mouillable, à savoir une surface sur laquelle la goutte d'encre liquide forme un angle de contact statique inférieur ou égal à 80°, préférentiellement inférieur ou égal à 60°.

2. Procédé d'impression selon l'une quelconque des revendications précédentes, la première vitesse d'éjection V1 de la goutte d'encre E1 étant telle que si l'on dépose plusieurs gouttes d'encre E1 ayant un volume VOL1 de 6 pL à la première vitesse d'éjection V1, le diamètre moyen des gouttes déposées solidifiées, est, vu par au-dessus, supérieur à 39 µm, de préférence égal ou supérieur à 40 µm et mieux égal ou supérieur à 42 µm.

3. Procédé d'impression selon l'une quelconque des revendications précédentes, la surface sur laquelle est imprimé le marquage étant une surface de courbure non-nulle.

4. Procédé d'impression selon l'une quelconque des revendications précédentes, le marquage étant imprimé à la surface d'un article d'optique, de préférence une lentille ophtalmique.

5. Procédé d'impression selon l'une quelconque des revendications précédentes, le volume VOL1 de la goutte d'encre E1 étant tel qu'il est inférieur à un volume critique pour lequel la goutte d'encre E1 éclate ou rebondit lorsqu'elle est déposée à la première vitesse V1 sur la surface non mouillable.

6. Procédé d'impression selon l'une quelconque des revendications précédentes, la surface non mouillable pour l'encre sous forme liquide étant telle que les gouttes d'encre liquide ont un angle de contact statique avec la surface supérieur ou égal à 90°, de préférence supérieur ou égal à 100°.

7. Procédé d'impression selon l'une quelconque des revendications précédentes, les gouttes d'encre E1 et les gouttes d'encre E2 ayant respectivement un premier volume VOL1 et un second volume VOL2 tels que VOL1/VOL2 < 1, de préférence VOL1/VOL2 ≤ 0,5, mieux VOL1/VOL2 ≤ 0,2.

8. Procédé d'impression selon l'une quelconque des revendications précédentes, le premier volume VOL1 étant compris dans l'intervalle [5 pL à 15 pL].

9. Procédé d'impression selon l'une quelconque des revendications précédentes, le second volume VOL2 étant compris dans l'intervalle [20 pL à 50 pL].

10. Procédé d'impression selon l'une quelconque des revendications précédentes, ladite surface étant une surface hydrophobe ayant un angle de contact statique avec l'eau supérieur ou égal à 80°, mieux supérieur ou égal à 90°, mieux encore supérieur ou égal à 100°, et de préférence supérieur ou égal à 110°.

11. Procédé d'impression d'un marquage par jet d'encre sur une surface non mouillable pour ladite encre sous forme liquide, comprenant une répétition des étapes du procédé selon l'une des revendications précédentes, avec ainsi la formation de plusieurs premières gouttes d'encre E1 solidifiées sur la surface non mouillable et le dépôt de plusieurs deuxièmes gouttes d'encre E2 par-dessus lesdites premières gouttes E1.

12. Procédé d'impression d'un marquage par jet d'encre sur une surface non mouillable selon la revendication 11, plusieurs des premières gouttes d'encre E1 solidifiées étant formées sur la surface en un premier passage d'impression jet d'encre et les deuxièmes gouttes d'encre E2 déposées par-dessus lesdites premières gouttes d'encre E1 étant déposées dans un deuxième passage d'impression par jet d'encre, postérieur au premier passage d'impression par jet d'encre.

13. Article comprenant une surface principale sur laquelle est imprimé au moins un marquage par jet d'encre sur une surface non mouillable pour l'encre sous forme liquide, le marquage étant obtenu selon le procédé d'impression de l'une des revendications 1 à 12.

14. Article selon la revendication 13, comprenant plusieurs premières gouttes E1 séchées formant une première couche et comportant plusieurs deuxièmes gouttes, formant au moins une deuxième couche.

## Patentansprüche

1. Verfahren zum Drucken einer Markierung mittels Tintenstrahl auf einer für die Tinte in flüssiger Form nicht benetzbaren Oberfläche, welches die folgenden Schritte umfasst:
(a) Ausbilden wenigstens eines verfestigten ersten Tintentropfens E1 auf der Oberfläche durch Ausstoßen eines ersten Tropfens flüssiger Tinte mittels eines Druckkopfes mit einer bestimmten ersten Ausstoßgeschwindigkeit V1 und mit einem bestimmten ersten Volumen VOL1, und
(b) Aufbringen, auf wenigstens einen Teil des verfestigten ersten Tintentropfens, wenigstens eines zweiten Tintentropfens E2, der ein zweites Volumen VOL2 aufweist, durch Ausstoßen eines zweiten Tropfens flüssiger Tinte mittels eines Druckkopfes mit einer Ausstoßgeschwindigkeit V2,
**dadurch gekennzeichnet, dass** die erste Geschwindigkeit V1 so bestimmt wird, dass im Schritt (a) der erste Tintentropfen auf der nicht benetzbaren Oberfläche zerquetscht wird, und dass im zweiten Schritt (b) dem verfestigten ersten Tintentropfen eine Kontaktfläche mit der nicht benetzbaren Oberfläche verliehen wird, die zu der Kontaktfläche äquivalent ist, die im Gleichgewicht für einen Tropfen flüssiger Tinte mit demselben Volumen VOL1 auf einer benetzbaren Oberfläche erhalten wird, nämlich einer Oberfläche, auf welcher der Tropfen flüssiger Tinte einen statischen Kontaktwinkel bildet, der kleiner oder gleich 80°, vorzugsweise kleiner oder gleich 60° ist.

2. Verfahren zum Drucken nach einem der vorhergehenden Ansprüche, wobei die erste Ausstoßgeschwindigkeit V1 des Tintentropfens E1 so beschaffen ist, dass, wenn mehrere Tintentropfen E1, die ein Volumen VOL1 von 6 pl aufweisen, mit der ersten Ausstoßgeschwindigkeit V1 aufgebracht werden, der mittlere Durchmesser der verfestigten aufgebrachten Tropfen, von oben betrachtet, größer als 39 µm, vorzugsweise größer oder gleich 40 µm und besser größer oder gleich 42 µm ist.

3. Verfahren zum Drucken nach einem der vorhergehenden Ansprüche, wobei die Oberfläche, auf welcher die Markierung gedruckt wird, eine Oberfläche mit einer von null verschiedenen Krümmung ist.

4. Verfahren zum Drucken nach einem der vorhergehenden Ansprüche, wobei die Markierung auf die Oberfläche eines optischen Artikels, vorzugsweise einer ophthalmischen Linse, gedruckt wird.

5. Verfahren zum Drucken nach einem der vorhergehenden Ansprüche, wobei das Volumen VOL1 des Tintentropfens E1 so beschaffen ist, dass es kleiner als ein kritisches Volumen ist, bei welchem der Tintentropfen E1 zerplatzt oder zurückspringt, wenn er mit der ersten Geschwindigkeit V1 auf die nicht benetzbare Oberfläche aufgebracht wird.

6. Verfahren zum Drucken nach einem der vorhergehenden Ansprüche, wobei die für die Tinte in flüssiger Form nicht benetzbare Oberfläche so beschaffen ist, dass die Tropfen flüssiger Tinte einen statischen Kontaktwinkel mit der Oberfläche aufweisen, der größer oder gleich 90°, vorzugsweise größer oder gleich 100° ist.

7. Verfahren zum Drucken nach einem der vorhergehenden Ansprüche, wobei die Tintentropfen E1 und die Tintentropfen E2 ein solches erstes Volumen VOL1 bzw. zweites Volumen VOL2 aufweisen, dass VOL1/VOL2 < 1, vorzugsweise VOL1/VOL2 ≤ 0,5, besser VOL1/VOL2 ≤ 0,2 ist.

8. Verfahren zum Drucken nach einem der vorhergehenden Ansprüche, wobei das erste Volumen VOL1 im Intervall [5 pl bis 15 pl] liegt.

9. Verfahren zum Drucken nach einem der vorhergehenden Ansprüche, wobei das zweite Volumen VOL2 im Intervall [20 pl bis 50 pl] liegt.

10. Verfahren zum Drucken nach einem der vorhergehenden Ansprüche, wobei die Oberfläche eine hydrophobe Oberfläche ist, die einen statischen Kontaktwinkel mit Wasser aufweist, der größer oder gleich 80°, besser größer oder gleich 90°, noch besser größer oder gleich 100° und vorzugsweise größer oder gleich 110° ist.

11. Verfahren zum Drucken einer Markierung mittels Tintenstrahl auf einer für diese Tinte in flüssiger Form nicht benetzbaren Oberfläche, welches eine Wiederholung der Schritte des Verfahrens nach einem der vorhergehenden Ansprüche umfasst, somit mit der Ausbildung mehrerer verfestigter erster Tintentropfen E1 auf der nicht benetzbaren Oberfläche und der Aufbringung mehrerer zweiter Tintentropfen E2 über den ersten Tropfen E1.

12. Verfahren zum Drucken einer Markierung mittels Tintenstrahl auf einer nicht benetzbaren Oberfläche nach Anspruch 11, wobei mehrere der verfestigten ersten Tintentropfen E1 auf der Oberfläche in einem ersten Tintenstrahldruck-Durchlauf ausgebildet werden und die zweiten Tintentropfen E2, die über den ersten Tintentropfen E1 aufgebracht werden, in einem zweiten Tintenstrahldruck-Durchlauf nach dem ersten Tintenstrahldruck-Durchlauf aufgebracht werden.

13. Artikel, welcher eine Hauptfläche umfasst, auf welcher wenigstens eine Markierung mittels Tintenstrahl auf einer für die Tinte in flüssiger Form nicht benetzbaren Oberfläche gedruckt ist, wobei die Markierung gemäß dem Verfahren zum Drucken nach einem der Ansprüche 1 bis 12 erhalten wird.

14. Artikel nach Anspruch 13, welcher mehrere getrocknete erste Tropfen E1 umfasst, die eine erste Schicht bilden, und mehrere zweite Tropfen aufweist, die wenigstens eine zweite Schicht bilden.

## Claims

1. A method for printing an inkjet marking on a surface that cannot be wetted by the ink in liquid form, comprising the following steps:
(a) forming at least a first drop of solidified ink E1 on the surface, by ejecting, by means of a printhead, a first drop of liquid ink at a first given ejection velocity V1 and with a first given volume VOL1, and
(b) depositing, on at least one portion of said first drop of solidified ink, at least a second drop of ink E2 having a second volume VOL2, by ejecting, by means of a printhead, a second drop of liquid ink at an ejection velocity V2,
**characterized in that** the first velocity V1 is determined to, at step a), flatten said first drop of ink on said surface that cannot be wetted, and to, at step b), give said first drop of solidified ink a contact area with said surface that cannot be wetted equivalent to the contact area obtained at equilibrium for a drop of liquid ink of the same volume VOL1 on a surface that can be wetted, i.e a surface on which the drop of liquid ink forms a static contact angle of less than or equal to 80°, preferably less than or equal to 60°,

2. The printing method as claimed in either one of the preceding claims, the first ejection velocity V1 of the drop of ink E1 being such that if several drops of ink E1 having a volume VOL1 of 6 pl are deposited at the first ejection velocity V1, the mean diameter of the solidified drops deposited is, seen from above, greater than 39 µm, preferably greater than or equal to 40 µm and better greater than or equal to 42 µm.

3. The printing method as claimed in any one of the preceding claims, the surface on which the marking is printed being a surface of non-zero curvature.

4. The printing method as claimed in any one of the preceding claims, the marking being printed on the surface of an optical article, preferably an ophthalmic lens.

5. The printing method as claimed in any one of the preceding claims, the volume VOL1 of the drop of ink E1 being such that it is less than a critical volume for which the drop of ink E1 bursts or rebounds when it is deposited at the first velocity V1 on the surface that cannot be wetted.

6. The printing method as claimed in any one of the preceding claims, the surface that cannot be wetted by the ink in liquid form being such that the drops of liquid ink have a static contact angle with the surface of greater than or equal to 90°, preferably greater than or equal to 100°.

7. The printing method as claimed in any one of the preceding claims, the drops of ink E1 and the drops of ink E2 respectively having a first volume VOL1 and a second volume VOL2 such that VOL1/VOL2 < 1, preferably VOL1/VOL2 ≤ 0.5, better VOL1/VOL2 ≤ 0.2.

8. The printing method as claimed in any one of the preceding claims, the first volume VOL1 being within the range [5 pl to 15 pl].

9. The printing method as claimed in any one of the preceding claims, the second volume VOL2 being within the range [20 pl to 50 pl].

10. The printing method as claimed in any one of the preceding claims, said surface being a hydrophobic surface having a static contact angle with water of greater than or equal to 80°, better greater than or equal to 90°, better still greater than or equal to 100°, and preferably greater than or equal to 110°.

11. A method for printing an inkjet marking on a surface that cannot be wetted by said ink in liquid form, comprising a repetition of the steps of the method as claimed in one of the preceding claims, thus with the formation of several solidified first drops of ink E1 on the surface that cannot be wetted and the deposition of several second drops of ink E2 on top of said first drops E1.

12. The method for printing an inkjet marking on a non-wettable surface as claimed in claim 11, several of the solidified first drops of ink E1 being formed on the surface in a first inkjet printing pass and the second drops of ink E2 deposited on top of said first drops of ink E1 being deposited in a second inkjet printing pass, after the first inkjet printing pass.

13. An article comprising a main surface on which at least one inkjet marking is printed on a surface that cannot be wetted by the ink in liquid form, the marking being obtained according to the process claimed in any of claims 1 to 12.

14. The article as claimed in claim 13, comprising several dried first drops E1 forming a first layer and having several second drops, forming at least a second layer.
